Europäisches Patentamt

European Patent Office

Office européen des brevets

(19)

(11) **EP 0 883 102 B1**

(12) **FASCICULE DE BREVET EUROPEEN**

(45) Date de publication et mention
de la délivrance du brevet:
**02.05.2003 Bulletin 2003/18**

(51) Int Cl.⁷: **G09G 3/20**, G09G 3/36

(21) Numéro de dépôt: **98401140.3**

(22) Date de dépôt: **13.05.1998**

(54) **Procédé de compensation d'un circuit capacitif perturbé et application aux écrans de visualisation matriciels.**

Methode zur Kompensation von Störungen in einer kapazitiven Schaltung und Anwendung in Matrixanzeigevorrichtungen

Method for compensating distortions in a capacitive circuit and its use in matrix displays

(84) Etats contractants désignés:
**DE FR GB NL**

(30) Priorité: **05.06.1997 FR 9706940**

(43) Date de publication de la demande:
**09.12.1998 Bulletin 1998/50**

(73) Titulaire: **THALES AVIONICS LCD S.A.**
**75008 Paris (FR)**

(72) Inventeur: **Maurice, François**
**92100 Boulogne-Billancourt (FR)**

(74) Mandataire: **Chaverneff, Vladimir et al**
**THALES Intellectual Property,**
**13, avenue du Président S. Allende**
**94117 Arcueil Cédex (FR)**

(56) Documents cités:
**EP-A- 0 572 079          EP-A- 0 731 442**

- **DATABASE WPI Section PQ, Week 9507 Derwent Publications Ltd., London, GB; Class P81, AN 95-052247 XP002058144 -& WO 95 00874 A (HITACHI LTD) , 5 janvier 1995**
- **H. UNBEHAUEN: "Regelungstechnik I", 1985, VIEWEG, BRAUNSCHWEIG, page 7**
- **H.W.SCHüSSLER: "Netwerke, Signale und Systeme Band I", 1981, SPRINGER VERLAG, BERLIN, pages 11, 12 et 61**
- **U. TIETZE, C. SCHENK:"Halbleiter-Schaltungstechnik", 1985, SPRINGER VERLAG, BERLIN, pages 365 - 368**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé de compensation d'un circuit capacitif perturbé, plus particulièrement un procédé de compensation d'un circuit comportant au moins un conducteur à un potentiel déterminé, au moins d'autres conducteurs générant des perturbations par couplage capacitif sur ledit conducteur et un bus de compensation des perturbations couplé capacitivement audit conducteur.

La présente invention concerne aussi une application de ce procédé aux écrans de visualisation à commande matricielle. Elle concerne donc un dispositif de compensation de potentiel pour écran de visualisation commandé par un réseau d'électrodes disposé matriciellement. Il s'agit plus particulièrement d'écrans à cristaux liquides, mais d'autres écrans du même type peuvent aussi être utilisés.

La présente invention sera décrite en se référant à un écran de visualisation à commande matricielle, mais elle peut s'appliquer à tous les systèmes capacitifs perturbés qui nécessitent une compensation, celle-ci étant réalisée sans rajouter de ligne de mesure spécifique.

Dans le cas d'un écran de visualisation à commande matricielle, celui-ci est constitué, de manière connue, d'un ensemble de lignes et d'un ensemble de colonnes parallèles activables disposées perpendiculairement les unes aux autres. Ce type d'écran peut fonctionner de manière séquentielle, les lignes étant activées les unes après les autres, tandis que les données sont affichées sur les colonnes ou vice et versa. Dans le cas d'un fonctionnement séquentiel ligne par ligne, le circuit de commande ligne impose un premier potentiel de sélection à la ligne choisie, les autres lignes étant rapportées à un potentiel de référence. Pendant une partie de la durée correspondant à la commande de ligne, les circuits de commande de colonne imposent sur toutes les colonnes un potentiel fonction des données à afficher, de ce fait tous les circuits de commande de colonnes changent simultanément d'état. Les changements simultanés d'état produisent donc un couplage capacitif entre lignes et colonnes d'autant plus intense que la différence entre impédance de commande et impédance de charge est grande au profit de cette dernière.

Ainsi, différentes solutions ont été proposées pour compenser les couplages capacitifs existant entre les lignes et les colonnes d'un écran matriciel utilisant des dispositifs de commande lignes ou colonnes, plus particulièrement ceux présentant une impédance de sortie haute ou moyenne.

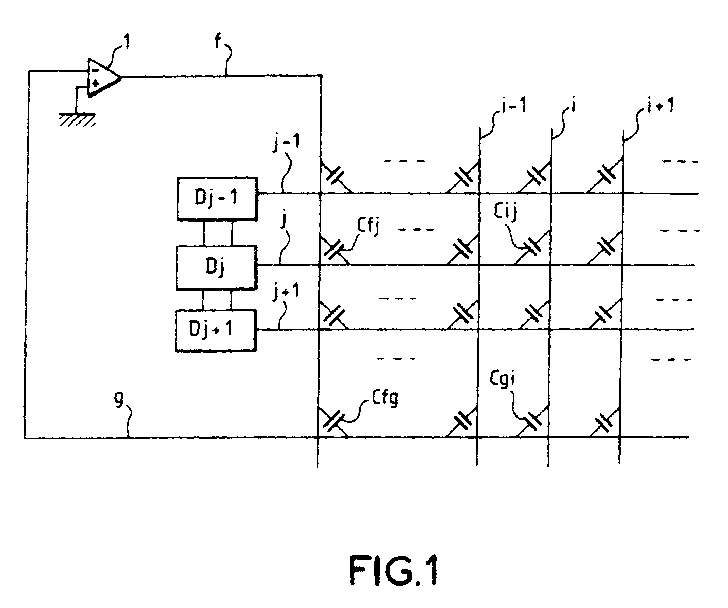

Un circuit de compensation de ce type est décrit par exemple dans la demande de brevet français N°94 05987 déposée le 17 Mai 1994 au nom de THOMSON-LCD. Dans ce cas, comme représenté sur la figure 1, on utilise une électrode supplémentaire, à savoir une colonne f couplée capacitivement par des capacités $Cf_j$

à chacune des lignes de l'écran ainsi qu'une ligne supplémentaire g couplée aussi capacitivement aux colonnes de l'écran qu'elle croise pour réaliser la compensation. De manière plus spécifique, sur la figure 1 on a représenté schématiquement un écran de visualisation à réseau matriciel comportant des colonnes i (i variant de 1 à n) et des lignes j (j variant de 1 à m) commandées par des circuits de commande lignes Dj-1 pour la ligne j-1, Dj pour la ligne j, Dj+1 pour la ligne j+1. Les circuits de commande de colonnes i-1, i, i+1 ne sont pas représentés sur le dessin.

Dans ce cas, lorsque la sortie d'un circuit de commande lignes Dj d'une ligne de sélection j n'est pas à basse impédance, il existe des couplages capacitifs non négligeables par le biais des condensateurs référencés Cij (i variant de 1 à n et j variant de 1 à m) entre les lignes i (i variant de 1 à n) et les colonnes j (j variant de 1 à m). Ces couplages capacitifs peuvent induire des tensions inacceptables sur les lignes pouvant aller jusqu'au changement d'état des transistors situés, de manière connue, aux intersections des lignes et colonnes de la matrice active lorsque les colonnes sont au repos.

Ainsi, comme représenté sur la figure 1, pour remédier à cet inconvénient et compenser les couplages, on a prévu une colonne supplémentaire f couplée capacitivement par les capacités $Cf_j$ à chacune des lignes j (j variant de 1 à m) de l'écran. La valeur de la capacité Cfj est choisie pour être voisine de la somme des capacités de couplage Ci entre une ligne et les colonnes qu'elles croisent. La colonne f peut être activée à chaque changement de polarité sur les colonnes, comme lors des inversions de trames ou des inversions de lignes par exemple. D'autre part, comme représenté sur la figure 1, un autre moyen pour commander la colonne f peut être de lui associer au travers d'un comparateur 1 une ligne g couplée capacitivement par les capacités Cgi aux colonnes i (i variant de 1 à n) qu'elle croise. Cette ligne g permet de détecter les couplages avec les colonnes de l'écran et de corriger le potentiel de la colonne f grâce au couplage capacitif Cfg entre la colonne f et la ligne g. Dans ce cas, deux électrodes supplémentaires sont nécessaires, à savoir la ligne g pour réaliser la mesure du déséquilibre dû au couplage capacitif et la colonne f pour compenser ce déséquilibre.

La demande EP 0731442 décrit un écran LCD comprenant un dispositif de réduction des perturbations liées au couplage capacitif ligne/colonne, qui utilise un premier bus pour la mesure de la perturbation et un deuxième bus pour appliquer une correction.

La présente invention a pour but de proposer un perfectionnement au dispositif ci-dessus permettant de n'utiliser qu'un seul bus ou électrode supplémentaire pour réaliser à la fois la mesure du déséquilibre et la compensation de ce déséquilibre. L'utilisation d'un seul bus permet, notamment pour les écrans de visualisation, de limiter leur taille, car les capacités de couplage telles que Cfj et Cgi nécessitent une surface importante lorsqu'elles sont réalisées sur la matrice elle-même.

En conséquence, la présente invention a pour objet un procédé de compensation d'un circuit comportant des premiers conducteurs à un potentiel déterminé, au moins un second conducteur de signaux générant des perturbations par couplage capacitif sur le conducteur et un bus de compensation des perturbations couplé capacitivement aux dits premiers conducteurs par des capacités, qui, en somme, ont la valeur d'une première capacité ($C_1$), caractérisé par les étapes suivantes :

-   mesure de la tension ($V_{comp}$) et du courant ($I_{comp}$) sur le bus de compensation ;
-   calcul d'une tension moyenne ($V_{pert}$) sur les premiers conducteurs perturbés et
-   détermination de la tension de consigne à appliquer sur le bus de compensation pour compenser la perturbation.

Selon un mode de réalisation préférentiel, la valeur de la tension est donnée par la formule suivante :

$$V_{pert} = \left[ V_{comp} + \int \frac{I_{comp}dt}{C_1} \right]$$

la valeur de $\int I_{comp}dt$ est calculée à partir de l'observation de la valeur de tension aux bornes d'une seconde capacité ($C_2$) en série avec le bus de compensation et parcourue par un même courant $I_{comp}$.

La présente invention a aussi pour objet un écran de visualisation comportant un réseau d'électrodes disposées matriciellement en lignes et en colonnes, une capacité de couplage étant associée à chaque croisement ligne/colonne, des circuits de commande lignes et colonnes et au moins un bus conducteur supplémentaire croisant l'ensemble des lignes et couplé capacitivement à chacune de celles-ci de sorte que la capacité de couplage correspondante ait une valeur du même ordre de grandeur que la somme des capacités de couplage entre une ligne ou une colonne et les colonnes ou les lignes qu'elle croise, et comportant un circuit de compensation des déséquilibres dus aux couplages capacitifs ligne/colonne lors des phases de commande, caractérisé en ce que l'entrée et la sortie du circuit de compensation sont couplées au même bus conducteur supplémentaire, pour mettre un oeuvre un procédé selon l'invention.

De préférence, cet écran comporte un circuit de compensation des déséquilibres dus au couplage capacitif ligne/colonne lors des phases de commande dont l'entrée et la sortie sont couplées audit bus supplémentaire.

D'autres caractéristiques et avantages de la présente invention apparaîtront à la lecture d'un mode de réalisation préférentiel, faite avec référence aux dessins ci-annexés, dans lesquels :

-   la figure 1 déjà décrite représente schématiquement un écran de visualisation de type matriciel muni d'un dispositif de compensation de potentiel conforme à l'art antérieur ;
-   la figure 2 représente schématiquement un écran de visualisation à réseau matriciel muni d'au moins une électrode supplémentaire réalisant la mesure et la compensation du déséquilibre, et
-   la figure 3 représente un mode de réalisation du circuit de compensation conforme à l'invention.
-   Pour simplifier la description, dans les figures, les mêmes éléments portent les mêmes références, en particulier la capacité C = ε (Cej + Ce'j) j variant de 1 à n sur la figure 2.

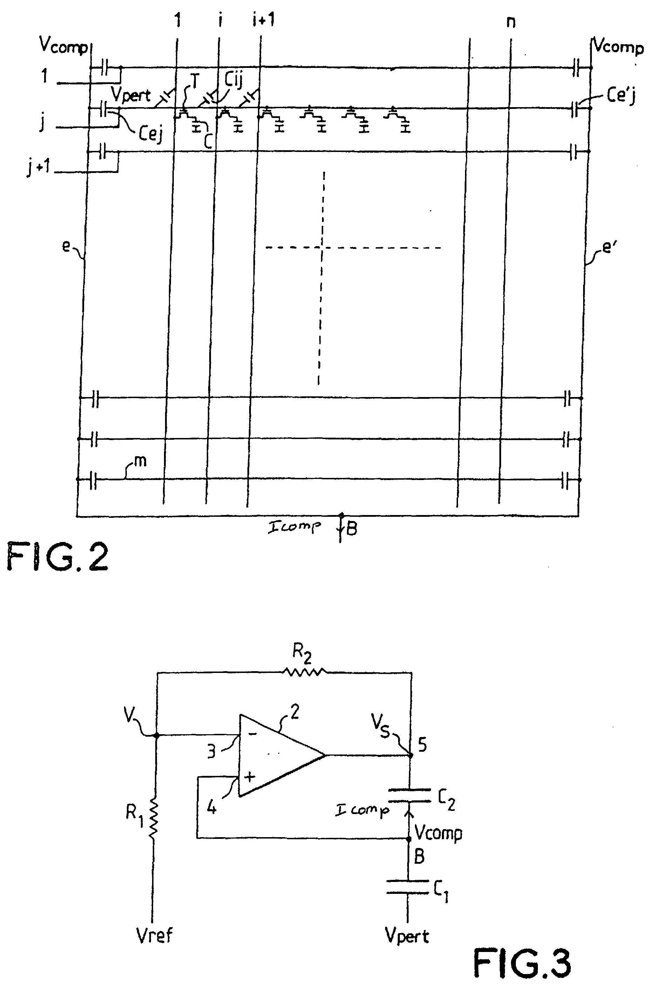

On décrira maintenant succintement le procédé de compensation d'un circuit comportant au moins un premier conducteur à un potentiel déterminé, au moins un générateur de signaux générant des perturbations sur le conducteur et un bus de compensation des perturbations couplé capacitivement audit premier conducteur par une même capacité $C_1$. Le procédé sera expliqué en se référant en partie à la figure 3. Tout d'abord on mesure le courant $I_{comp}$ et la tension $V_{comp}$ sur le bus supplémentaire ou ligne de compensation. A partir de cette mesure, on peut déduire la tension $V_{pert}$ des lignes perturbées, car les capacités $C_1$ sont connues et déterminées.

En effet, Q = CV, ceci donne la formule :

$$\left( V_{pert} - V_{comp} \right) C_1 = \int I_{comp}dt$$

d'où

$$V_{pert} = V_{comp} + \int \frac{I_{comp}dt}{C_1}$$

La valeur de $\int I_{comp}dt$ est mesurée par une capacité $C_2$ qui est choisie de manière à être supérieure à $C_1$.

$\int I_{comp}dt = C_2 (V_{comp} - V_s)$, $V_s$ étant la tension sur l'autre borne de la capacité $C_2$

$$V_{pert} = V_{comp} + \frac{C_2}{C_1} \left( V_{comp} - V_s \right)$$

d'où

$$V_s = V_{comp} + \left(V_{comp} - V_{pert}\right)\frac{C_1}{C_2}$$

Pour réaliser la compensation du couplage, on utilise un diviseur résistif $R_2$, $R_1$ relié à une tension de référence $V_{ref}$, la tension entre $R_2$ et $R_1$ étant référencée V. Lorsque le circuit est dans une zone de fonctionnement stable, c'est-à-dire lorsque les points 3 et 4 sont au même potentiel : $V_{comp}$ = V, ce qui donne la formule

$$V_s = V + \left(\frac{V - V_{ref}}{R_1}\right)R_2$$

$$V_s = V_{comp} + \left(V_{comp} - V_{ref}\right)\frac{R_2}{R_1}$$

d'où si l'on réalise

$$\frac{R_2}{R_1} = \frac{C_1}{C_2}$$

alors $V_{ref} = V_{pert}$

On se rend compte que le circuit permet le contrôle de la tension du conducteur perturbé $V_{pert}$ par la tension de référence $V_{ref}$. Le circuit agit sur le bus de compensation jusqu'à réaliser l'égalité de ces tensions.

L'égalité des tensions au milieu des ponts diviseurs est obtenue en utilisant un amplificateur, comme représenté sur la figure 3.

On décrira maintenant, avec référence à la figure 2, un écran de visualisation à réseau matriciel, plus particulièrement un écran à cristaux liquides muni de bus ou d'électrodes supplémentaires conforme à la présente invention. Cet écran utilise le procédé décrit ci-dessus.

Cet écran de visualisation est constitué par un réseau matriciel de lignes 1, j, j+1 ...m et de colonnes 1, i, i + i ...n disposées perpendiculairement. Au croisement de chaque ligne et de chaque colonne est prévu un transistor de commande T, en général un transistor en couches minces, qui commande le pixel symbolisé par une capacité C. Les lignes 1, j, j + 1 ...m sont connectées de manière connue à des circuits de commande de lignes non représentés tandis que les colonnes 1, i, i + 1 ...n sont connectées de manière connue à des circuits de commande de colonnes non représentés. Comme décrit ci-dessus, lorsque les sorties des circuits de commande de lignes ne sont pas à basse impédance, il existe des couplages capacitifs non négligeables (représentés par les capacités Cij) entre les lignes et les colonnes. Aussi, pour remédier à cet inconvénient et comme représenté sur la figure 2, on prévoit au moins un bus supplémentaire (deux dans le mode de réalisation représenté). Ces bus supplémentaires e, e' sont réalisés parallèlement aux colonnes 1, i, i + 1 ...n et sont couplés capacitivement par les capacités Cej, Ce'j à chacune des lignes 1, j, j + 1 ...m de l'écran. Dans le mode de réalisation représenté à la figure 2, la somme des capacités d'une ligne (Cej + Ce'j) doit être voisine de la somme des capacités de couplage Cij (i variant de 1 à n) entre une ligne j déterminée et les colonnes 1, i, i + 1 ...n qu'elle croise. Dans le mode de réalisation représenté, les deux bus supplémentaires e, e' sont reliés entre eux au point B, le point B étant relié à un circuit de compensation dont un mode de réalisation préférentiel est représenté sur la figure 3.

Comme représenté sur la figure 3, le circuit de compensation permettant de compenser les déséquilibres dus au couplage capacitif lignes/colonnes lors des phases de commande de l'écran matriciel, est constitué par un amplificateur opérationnel 2 dont une des entrées, à savoir l'entrée négative 3 est reliée par l'intermédiaire d'une impédance, à savoir la résistance R1 dans le mode de réalisation représenté, à une tension de référence Vref. D'autre part, cette entrée 3 est aussi reliée par l'intermédiaire d'une seconde impédance, à savoir la résistance R2 à la sortie 5 de l'amplificateur opérationnel. De plus, la seconde entrée, à savoir l'entrée positive 4, est reliée au point B commun aux deux bus supplémentaires et elle est aussi connectée à travers une première capacité C2 à la sortie 5. Dans le mode de la réalisation de la figure 3, la capacité de compensation $C_1$ est égale à la somme des capacités reliant le ou les bus supplémentaires à chaque ligne du réseau matriciel.

On expliquera maintenant le fonctionnement du circuit de compensation décrit ci-dessus.

Conformément à la présente invention et comme mentionné ci-dessus, la valeur des résistances et des capacités du circuit de compensation ont été choisies de telle sorte que :

R1/R2 = $C_2/C_1$

sachant que $C_1$ est égal à :

$\Sigma$(Cej +Ce'j) avec j variant de 1 à m.

Avec le montage ci-dessus, lorsque les lignes sont perturbées capacitivement par les colonnes, le montage de l'amplificateur opérationnel fait que la sortie 5 est modifiée de manière à ramener la tension ligne à une valeur égale à la tension de référence permettant donc de compenser le déséquilibre avec le même bus (e, e').

La présente invention a été décrite avec deux bus e, e' supplémentaires ayant le même rôle. Il est évident pour l'homme de l'art que la présente invention peut s'appliquer à un circuit avec un seul bus supplémentaire e ou e'.

**Revendications**

1. Procédé de compensation d'un circuit comportant des premiers conducteurs à un potentiel déterminé, au moins un second conducteur générant des perturbations par couplage capacitif sur le conducteur et au moins un bus de compensation des perturbations couplé capacitivement aux dits premiers conducteurs par des capacités, qui en somme, ont la valeur d'une première capacité ($C_1$), **caractérisé par** les étapes suivantes :

   - mesure de la tension ($V_{comp}$) et du courant ($I_{comp}$) sur le bus de compensation ;
   - calcul d'une tension moyenne ($V_{pert}$) sur les premiers conducteurs perturbés, et
   - détermination de la tension de consigne à appliquer sur le même bus de compensation pour compenser la perturbation.

2. Procédé selon la revendication 1, **caractérisé en ce que** la valeur de la tension moyenne sur les premiers conducteurs perturbés est donnée par la formule suivante :

$$V_{pert} = \left[ V_{comp} + \int \frac{I_{comp} dt}{C_1} \right]$$

3. Procédé selon la revendication 2, **caractérisé en ce que** la valeur de $\int I_{comp} dt$ est calculée à partir de l'observation de la valeur de tension aux bornes d'une seconde capacité ($C_2$) en série avec le bus de compensation et parcouru par le même courant $I_{comp}$.

4. Procédé selon la revendication 3, **caractérisé en ce que** la seconde capacité ($C_2$) a une valeur supérieure à la valeur de la capacité $C_1$ et **en ce que** la tension sur cette capacité est telle que $V_s$ = f (tension sur le bus $V_{comp}$, tension moyenne sur les premiers conducteurs perturbés $V_{pert}$ et rapport des capacités).

5. Procédé selon l'une quelconque des revendications 1 à 4, **caractérisé en ce que** la compensation est réalisée par un circuit analogique comprenant un diviseur résistif avec une première impédance (R1) et une deuxième impédance (R2), tel que :

$$\frac{R_2}{R_1} = \frac{C_1}{C_2}$$

le diviseur étant connecté à un amplificateur opérationnel assurant l'égalité des tensions au milieu des ponts diviseurs, dont une première entrée est reliée à travers la première impédance (R1) à une tension de référence ($V_{ref}$), dont une seconde entrée (4) est connectée directement au bus de compensation (e,e') et dont la sortie (5) est connectée par l'intermédiaire de la deuxième impédance (R2) à la première entrée (3) et par l'intermédiaire d'un seconde capacité ($C_2$) au bus de compensation.

6. Ecran de visualisation comportant un réseau d'électrodes disposées matriciellement en lignes (j, j variant de 1 à m) et en colonnes (i, i variant de 1 à n), une capacité de couplage étant associée à chaque croisement ligne/colonne, des circuits de commande lignes et colonnes et au moins un bus conducteur supplémentaire (e, e') croisant l'ensemble des lignes et couplé capacitivement à chacune de celles-ci de sorte que la capacité de couplage (Cej + Ce'j) correspondante ait une valeur du même ordre de grandeur que la somme des capacités de couplage entre une ligne ou une colonne et les colonnes ou les lignes qu'elle croise, et comportant un circuit de compensation (2, R1, R2, C2) des déséquilibres dus aux couplages capacitifs ligne/colonne lors des phases de commande, **caractérisé en ce que** l'entrée (4) et la sortie (5) du circuit de compensation sont couplées au même bus conducteur supplémentaire (e, e'), pour mettre en oeuvre un procédé selon l'une quelconque des revendications 1 à 5.

7. Ecran de visualisation selon la revendication 6, **caractérisé en ce que** le circuit de compensation comporte un amplificateur opérationnel (2) dont une première entrée (3) est reliée à travers une première impédance (R1) à une tension de référence ($V_{ref}$), dont une seconde entrée (4) est connectée directement au bus supplémentaire (e, e') et dont la sortie (5) est connectée par l'intermédiaire d'une seconde impédance (R2) à la première entrée (3) et par l'intermédiaire d'une seconde capacité ($C_2$) au bus supplémentaire (e, e').

8. Ecran de visualisation selon la revendication 7, **caractérisé en ce que** le rapport de la seconde impédance ($R_2$) à la première impédance ($R_1$) est sensiblement égal au rapport de la somme des capacités de couplage ($C_1$) du bus supplémentaire avec les lignes ou les colonnes à la seconde capacité ($C_2$).

9. Ecran de visualisation selon l'une quelconque des revendications 6-à 8, **caractérisé en ce qu'**il comporte deux bus supplémentaires (e, e') placés à chaque extrémité du réseau matriciel et reliés l'un à l'autre (B) en entrée du circuit de compensation.

**Patentansprüche**

1. Verfahren zur Kompensation einer Schaltung, die erste Leiter auf einem bestimmten Potential, mindestens einen zweiten Leiter, der Störungen durch kapazitive Kopplung auf dem Leiter erzeugt, und mindestens eine Kompensations-Busleitung zur Kompensation der Störungen enthält, die kapazitiv mit den ersten Leitern über Kapazitäten gekoppelt ist, die insgesamt einen ersten Kapazitätswert ($C_1$) haben, **gekennzeichnet durch** die folgenden Verfahrensschritte:

   - die Spannung ($V_{comp}$) und der Strom ($I_{comp}$) auf der Kompensationsbusleitung werden gemessen;
   - eine mittlere Spannung ($V_{pert}$) auf den ersten gestörten Leitern wird berechnet;
   - die an die gemeinsame Kompensations-Busleitung anzulegende Sollspannung zur Kompensation der Störung wird bestimmt.

2. Verfahren nach Anspruch 1, **dadurch gekennzeichnet, daß** der mittlere Spannungswert auf den ersten gestörten Leitern sich aus folgender Formel ergibt:

$$V_{pert} = \left[ V_{comp} + \int \frac{I_{comp}\,dt}{C_1} \right]$$

3. Verfahren nach Anspruch 2, **dadurch gekennzeichnet, daß** der Wert von $\int I_{comp}.dt$ aufgrund der Beobachtung des Spannungswerts an den Klemmen eines zweiten Kondensators ($C_,$) berechnet wird, der mit der Kompensations-Busleitung in Reihe liegt und vom gleichen Strom $I_{comp}$ durchflossen wird.

4. Verfahren nach Anspruch 3, **dadurch gekennzeichnet, daß** der zweite Kondensator ($C_2$) einen größeren Kapazitätswert als der erste Kondensator ($C_1$) besitzt und daß die Spannung an diesem Kondensator so gewählt ist, daß $V_s$ eine Funktion der Spannung $V_{comp}$ auf der Busleitung, der mittleren Spannung $V_{pert}$ auf dem ersten gestörten Leiter und des Verhältnisses der Kondensatoren ist.

5. Verfahren nach einem beliebigen der Ansprüche 1 bis 4, **dadurch gekennzeichnet, daß** die Kompensation in einer analogen Schaltung erfolgt, die eine ohm'sche Teilerbrücke mit einer ersten Impedanz ($R_1$) und einer zweiten Impedanz ($R_2$) enthält derart, daß gilt: $R_2/R_1 = C_1/C_2$, wobei die Teilerbrücke an einen Operationsverstärker angeschlossen ist, der die Gleichheit der Spannungen am Zwischenabgriff der Teilerbrücke gewährleistet, wobei ein erster Eingang (3) des Operationsverstärkers über die erste Impedanz ($R_1$) an eine Bezugsspannung ($V_{ref}$) und ein zweiter Eingang (4) unmittelbar an die Kompensations-Busleitung (e, e') angeschlossen ist, während der Ausgang (5) über die zweite Impedanz ($R_2$) an den ersten Eingang (3) und über einen zweiten Kondensator ($C_2$) an die Kompensations-Busleitung angeschlossen ist.

6. Bildschirm mit einem Netz von matrixartig in Zeilen ($1 \le j \le m$) und in Spalten ($1 \le i \le n$) angeordneten Elektroden, mit je einer Kopplungskapazität an jedem Kreuzungspunkt zwischen Zeile und Spalte, mit Zeilen- und Spaltensteuerschaltungen und mindestens einer zusätzlichen Busleitung (e, e'), die alle Zeilen kreuzt und kapazitiv mit jeder Zeile so gekoppelt ist, daß die entsprechende Kopplungskapazität (Cej+Ce'j) einen Wert besitzt, der die gleiche Größenordnung wie die Summe der Kopplungskapazitäten zwischen einer Zeile oder einer Spalte und den Spalten oder Zeilen besitzt, die sie kreuzt, und mit einer Kompensationsschaltung (2, $R_1$, $R_2$, $C_2$) zur Kompensation der Ungleichgewichte aufgrund der kapazitiven Kopplung zwischen Zeilen und Spalten während der Steuerphasen, **dadurch gekennzeichnet, daß** der Eingang (4) und der Ausgang (5) der Kompensationsschaltung an die gemeinsame zusätzliche Busleitung (e, e') gekoppelt sind, um das Verfahren gemäß einem beliebigen der Ansprüche 1 bis 5 zu implementieren.

7. Bildschirm nach Anspruch 6, **dadurch gekennzeichnet, daß** die Kompensationsschaltung einen Operationsverstärker (2) enthält, der mit einem ersten Eingang (3) über eine erste Impedanz ($R_1$) an eine Bezugsspannung ($V_{ref}$), mit einem zweiten Eingang (4) unmittelbar an die zusätzliche Busleitung (e, e') und mit dem Ausgang (5) über eine zweite Impedanz ($R_2$) an den ersten Eingang (3) sowie über einen zweiten Kondensator ($C_2$) an die zusätzliche Busleitung (e, e') angeschlossen ist.

8. Bildschirm nach Anspruch 7, **dadurch gekennzeichnet, daß** das Verhältnis zwischen der zweiten Impedanz ($R_2$) und der ersten Impedanz ($R_1$) im wesentlichen dem Verhältnis zwischen der Summe der Kopplungskapazitäten ($C_1$) der zusätzlichen Busleitung mit den Zeilen oder Spalten und der Kapazität des zweiten Kondensators ($C_2$) gleicht.

9. Bildschirm nach einem beliebigen der Ansprüche 6 bis 8, **dadurch gekennzeichnet, daß** zwei zusätzliche Busleitungen (e, e') vorgesehen sind, die an jedem Ende des matrixartigen Netzes verlaufen und miteinander (B) und mit dem Eingang der Kompensationsschaltung verbunden sind.

**Claims**

1. Compensation method for a circuit comprising first conductors at a specified potential, at least one second conductor generating disturbances by capacitive coupling to the conductor and at least one disturbance compensation bus capacitively coupled to the said first conductors by capacitors which in sum, have the value of a first capacitor ($C_1$), **characterized by** the following steps:

   - measurement of the voltage ($V_{comp}$) and of the current ($I_{comp}$) on the compensation bus;
   - calculation of a mean voltage ($V_{dist}$) on the first disturbed conductors, and
   - determination of the set-point voltage to be applied to the same compensation bus in order to compensate for the disturbance.

2. Method according to Claim 1, **characterized in that** the value of the mean voltage on the first disturbed conductors is given by the following formula:

$$V_{dist} = \left[ V_{comp} + \int \frac{I_{comp} dt}{C_1} \right]$$

3. Method according to Claim 2, **characterized in that** the value of $I_{comp}dt$ is calculated from observation of the value of the voltage across the terminals of a second capacitor ($C_2$) which is in series with the compensation bus and through which the same current $I_{comp}$ flows.

4. Method according to Claim 3, **characterized in that** the second capacitor ($C_2$) has a value greater than the value of the capacitor $C_1$ and **in that** the voltage on this capacitor is such that $V_s$ = f (voltage on the bus $V_{comp}$, mean voltage on the disturbed first conductors $V_{dist}$ and ratio of the capacitances).

5. Process according to any one of Claims 1 to 4, **characterized in that** the compensation is effected by an analogue circuit comprising a resistive divider with a first impedance ($R_1$) and a second impedance ($R_2$), such that

$$\frac{R_2}{R_1} = \frac{C_1}{C_2}$$

the divider being connected to an operational amplifier equalizing the voltages at the middle of the divider bridges, a first input of which is linked across the first impedance ($R_1$) to a reference voltage ($V_{ref}$), a second input (4) of which is connected directly to the compensation bus (e, e') and the output (5) of which is connected by way of the second impedance ($R_2$) to the first input (3) and by way of a second capacitor ($C_2$) to the compensation bus.

6. Display screen comprising an array of electrodes arranged in matrix fashion in lines (j, j varying from 1 to m) and in columns (i, i varying from 1 to n), a coupling capacitor being associated with each line/column crossing, line and column drive circuits and at least one additional conductor bus (e, e') crossing all the lines and capacitively coupled to each of them in such a way that the corresponding coupling capacitance (Cej + Ce'j) has a value of the same order of magnitude as the sum of the coupling capacitances between a line or a column and the columns or the lines which it crosses, and comprising a compensation circuit (2, $R_1$, $R_2$, $C_2$) for the imbalances due to the line/column capacitive couplings during the drive phases, **characterized in that** the input (4) and the output (5) of the compensation circuit are coupled to the same additional conductor bus (e, e'), so as to implement a method according to any one of Claims 1 to 5.

7. Display screen according to Claim 6, **characterized in that** the compensation circuit comprises an operational amplifier (2), a first input (3) of which is linked across a first impedance ($R_1$) to a reference voltage ($V_{ref}$), a second input (4) of which is connected directly to the additional bus (e, e') and the output (5) of which is connected via a second impedance ($R_2$) to the first input (3) and via a second capacitor ($C_2$) to the additional bus (e, e').

8. Display screen according to Claim 7, **characterized in that** the ratio of the second impedance ($R_2$) to the first impedance ($R_1$) is substantially equal to the ratio of the sum of the capacitances ($C_1$) coupling the additional bus with the lines or the columns to the second capacitance ($C_2$).

9. Display screen according to any one of Claims 6 to 8, **characterized in that** it comprises two additional buses (e, e') placed at each end of the matrix array and linked one to the other (B) at the input of the compensation circuit.

FIG.1

FIG.2

FIG.3